# EUROPEAN PATENT APPLICATION

(11) **EP 2 244 035 A1**
(43) Date of publication of application: **27.10.2010**
(21) Application number: 10160814.9
(22) Date of filing: 23.04.2010
(51) Int. Cl.: F24J 2/54

(54) **Carrier device for solar panels**

(30) Priority: 23.04.2009 NL 2002779
(71) Applicant: Van Der Valk Systemen B.V., 2681 LP Monster (NL)
(72) Inventor: van Deursen, Adrianus Gerardus, 2253 HA, Voorschoten (NL); Prins, Vincent, 2371 GB, Roelofarendsveen (NL); Broos, Johan Martien, 2673 BC, Naaldwijk (NL)
(74) Representative: Ketelaars, Maarten F.J.M.

(57) **Abstract**

A carrier device for elements (9) intended for absorbing and/or reflecting and/or focusing solar radiation, such as solar cells, solar collectors, mirrors, lenses and the like, comprising a main frame (1) made up of longitudinal runners (2) extending parallel next to one another and cross runners (3) extending transversely to the longitudinal runners (2), auxiliary frames (5), which are rotatably attached to the main frame (1), for the elements (9), and also a support construction (11-13) acting on two of the longitudinal runners (2). In this construction, universal junction points (4) are provided, to each of which a longitudinal runner (2) and an auxiliary frame (5) are fastened.

## Description

The invention relates to a carrier device for elements intended for absorbing and/or reflecting and/or focusing solar radiation, such as solar cells, solar collectors, mirrors, lenses and the like, comprising a main frame made up of longitudinal runners extending parallel next to one another and cross runners extending transversely to the longitudinal runners, auxiliary frames, which are rotatably attached to the main frame, for the elements, and also a support construction acting on two of the horizontal runners.

A carrier device of this type is generally known. The longitudinal runners can be placed at a height such that the elements are optimally directed for as long a period as possible with respect to the sun in order to catch as much energy as possible. In this regard, account is taken of the average local position of the sun over the course of a year. The energy originating from the sun can be converted into electric power on use of photovoltaic solar cells. It is also possible to heat water by means of solar collectors. It is also known to reflect sunlight to a central unit by means of a number of mirrors, likewise for generating electric power or heat.

The support devices are usually used outdoors, meaning that they must be sufficiently strong and rigid to withstand loads by the wind, snow and the like. Because the panels can take up large surface areas, the mechanical properties of the support device must satisfy stringent requirements. The known devices are therefore equipped with heavy constructional components which must be able to transmit the loads generated by wind and snow and the like to the substrate without much deformation of the construction. That is to say, for an acceptable output of the device, it is very important that the desired orientation of the panels with respect to the sun can still be maintained even under high loads. On the other hand, it is desirable to keep the investment in support constructions within a reasonable scale, so that competition with traditional forms of energy generation remains possible.

The object of the invention is therefore to provide a device of the type mentioned hereinbefore for supporting solar panels and the like that is more satisfactory both from the point of view of constructional technology and from an economic point of view. That object is achieved in that universal junction points are provided, to each of which a longitudinal runner and an auxiliary frame are fastened. Preferably, substantially all the connections between a longitudinal runner and a cross runner are formed by universal and identical junction points of this type. Furthermore, struts extending obliquely between the longitudinal runners can be fastened to the junction points in connection with increasing the shear rigidity of the main frame.

The junction points can be embodied in many different ways. However, for all the variants, it is the case that the various carrying parts of the device meet at said junction points. At the site of the junction points, the longitudinal runners and the cross runners can be securely fastened to one another so as to produce a rigid overall entity which can hold the auxiliary frames with the elements stably in the desired position. The same applies to the positions in which the main frame is supported by the support construction: the parts of the support construction that are located there can act on the longitudinal runners by means of the junction points.

Various types of elements or profiles can be used for the longitudinal runners and the cross runners. Preferably, the cross runners can comprise hollow rods, the ends of which may be formed by oblate fastening lips, which fastening lips are each connected to a junction point. In turn, the junction points can each comprise one or more fastening flanges, a cross runner being fastened to the fastening flange of at least one of the junction points. A particularly stable construction is obtained if the junction points each comprise two fastening flanges located on either side of the longitudinal runner, a cross runner being fastened to the fastening flanges of at least one of the junction points. Instead of oblate fastening lips, separate fastening fittings, which can for example be secured to the ends of the rods by welding, clamping and the like, can also be provided at the ends of the rods.

In addition, the junction points can each comprise a support flange which is fastened to the support construction. This support construction, which extends spread out substantially over the entire length of the longitudinal runners, can also be embodied in many different ways. In particular, the support construction can comprise legs or rods, an end of which is fastened in each case to a junction point. These rods are preferably hollow and can have a circular cross section. These rods can be pinched flat at their ends, so that fastening lips are obtained there. As an alternative, separate fastening fittings can be provided at the ends of the rods. The rods can be fastened to the fastening flanges of the junction points by means of the fastening lips.

Furthermore, the other end of the rods can be supported on a foundation, such as a base. A particularly stable support is obtained if one or more of the rods form an acute or oblique angle with the longitudinal direction of the longitudinal runners. An example of this is an embodiment wherein in each case at least two rods converge from the main frame and are supported on one and the same foundation.

However, the junction points serve not only to join together the components of the frame but are also involved, as mentioned hereinbefore, in the fastening and supporting of the auxiliary frames and the panels. In particular, each junction point can in this case be provided with a bracket to which an auxiliary frame is fastened. The auxiliary frames come to lie at a certain distance above the main frame by means of brackets of this type. This has the advantage that the auxiliary frames can be placed in a simple manner in an oblique position with respect to the frame, depending on the position of the sun. According to a preferred embodiment, the auxiliary frames can in that connection be rotatable about an axis which is parallel to the cross runners.

In connection with the rotating of the auxiliary frames, a bearing block may be located on each bracket, whereas the auxiliary frames each contain a carrier which is rotatably supported in the bearing block of a junction point provided on a longitudinal runner and the opposing bearing block of a junction point provided on the other longitudinal runner. The bearing portion of these bearing blocks can be embodied in many different ways. An example of this is a slide bearing with a plastics material shell in which a cylindrical carrier is rotatably supported. Furthermore, the carriers can each be provided with mutually parallel arms which are distributed over the length of the carrier and to which a panel is fastened.

The junction points themselves can also be embodied in many different ways. Thus, the junction points can consist of a single entity, and be slid on or around the longitudinal runners. However, according to a preferable embodiment, each junction point comprises two fitting pieces, between each of which a longitudinal runner is clamped. These associated fitting pieces can be securely clamped to or around the longitudinal runner parts in question by means of suitable bolt connections. In connection with the ensuring of a stable construction, the mutually facing surfaces of in each case a fitting piece and a longitudinal runner can be shaped in a corresponding manner. The fitting pieces can be joined together to form a single entity by means of an intervening dam, in such a way that a C shape is produced.

The invention further relates to an arrangement for generating energy from solar radiation, comprising a carrier device as described hereinbefore with a main frame made up of longitudinal runners extending parallel next to one another, cross runners extending transversely to the longitudinal runners, auxiliary frames which are rotatably attached to the main frame, and also a support construction acting on the main frame, the auxiliary frames being provided with elements intended for absorbing or reflecting solar radiation, such as solar cells, solar collectors, mirrors and the like.

In addition, the invention relates to a universal junction point for the carrier device as described hereinbefore.

The invention will be commented on hereinafter in greater detail based on an exemplary embodiment illustrated in the figures, in which:
Figure 1 is a perspective view obliquely from the front and from above;
Figure 2 is a perspective view obliquely from the rear and from above;
Figure 3 is a rear view;
Figure 4 is a cross section;
Figure 5 shows on a larger scale the detail according to V from Figure 4; and
Figure 6 is a perspective view of the detail from Figure 5.

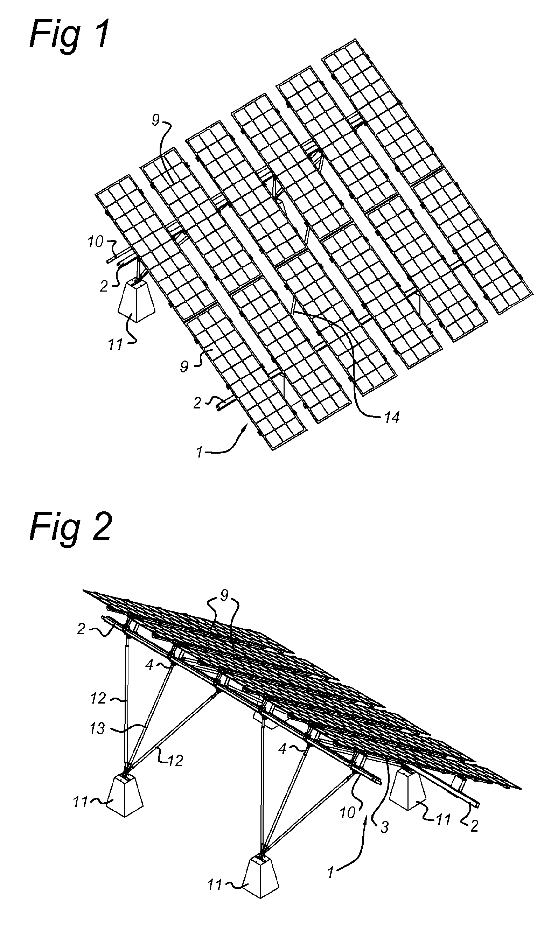

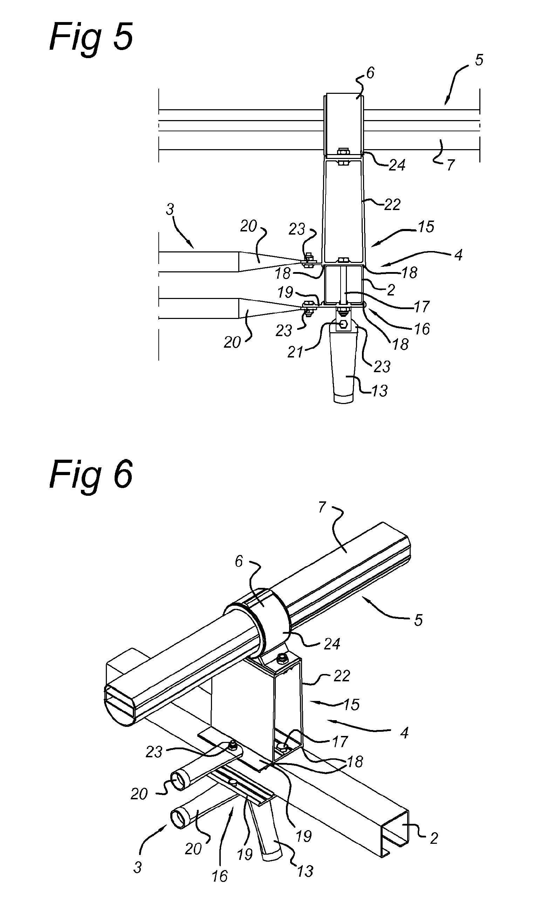

The device represented in Figures 1-4 has a main frame 1 consisting of the longitudinal runners 2 and the cross runners 3 which join the longitudinal runners together. Furthermore, the strut 14 is fastened to the longitudinal runners 2. This strut 14 is directed obliquely, in such a way that the main frame 1 is shear rigid in the plane defined by the longitudinal and cross runners. On the main frame 1, the auxiliary frames 5 are supported in the bearing blocks 24 with rotary bearings 6, as shown in Figures 5 and 6. These auxiliary frames each consist of a carrier 7 with arms 8 attached thereto so as to be spread out in a uniform manner. The panels 9, in this case with photovoltaic cells, are fastened to these arms. The auxiliary frames 5 with the panels can be rotated in an oblique position, about the axis of the carriers 7, depending on the position of the sun, by means of the adjusting device, the adjusting rod 10 of which is represented in Figures 1-3.

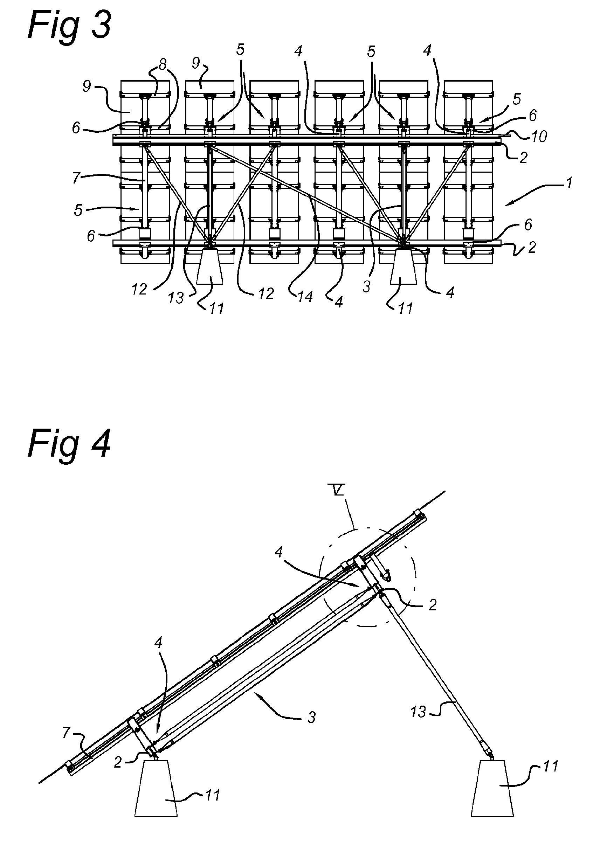

The main frame 1 is supported on a substrate by means of the bases 11. The lower longitudinal runner 2 is directly supported on the bases 11 via junction points 4 to be described in greater detail. The upper longitudinal runner 2 is supported by means of the rods 12 and 13. In the rear view of Figure 3, some of these rods 13 are directed perpendicularly to the longitudinal runners 2, other rods 12 diverge obliquely. The rods 12-14 have oblate fastening lips 23 at both ends.

Each of the rods 13 is fastened to the upper longitudinal runner 2 by a junction point 4, as is represented on a larger scale in Figures 5 and 6. These junction points each consist of two fitting pieces 15, 16, between which a longitudinal runner 2 is clamped by means of a bolt connection 17. The fitting pieces have ledges 18 between which the longitudinal runner 2, which is embodied as a C-shaped profile, is trapped. Furthermore, they have fastening flanges 19, to each of which an oblate fastening lip 23 of the rods 20 is fastened. These two rods 20 together form the cross runner 3. The bottom fitting piece 16 also has a support flange 21 to which the fastening lip 23 of the rod 13 is fastened.

The top fitting piece 15 has an upright bracket 22 to which the rotary bearing 6 is fitted.

The carriers 7, and thus the auxiliary frames 5 with the panels 9, are therefore fitted at a certain height above the main frame 1, in such a way that rotations thereof about the axis of the carriers 7 are possible.

Like the upper longitudinal runner 2, the lower longitudinal runner 2 is also supported on a base 11 by a junction point 4 of this type, the support flange 21 then being fastened directly thereto without the intervention of a rod. Furthermore, the bottom ends of the obliquely upwardly diverging rods 12 are fastened to said junction points 4. The bottom end of the obliquely positioned strut 14 is also fastened to one of said junction points.

The connection between the longitudinal runners 2 and the carriers 7 is embodied in all cases with junction points 4 of this type. However, in the case of some of said junction points 4, the fastening flanges 19 remain unused because the cross runners 3 or rods 20 are omitted there. The support flanges 21 are not used in all cases either: some of the junction points 4 on the lower longitudinal runner 2 function merely as a connection between the carriers 7 and the longitudinal runner 2. Nevertheless, one and the same junction point 4 can be used in all cases for each connection between the main frame 1, auxiliary frames 5 and rods 12, 13, 14 and 20; this greatly simplifies the construction and makes it more economical.

List of reference symbols
- 1.: Main frame
- 2.: Longitudinal runner
- 3.: Cross runner
- 4.: Universal junction point
- 5.: Auxiliary frame
- 6.: Rotary bearing
- 7.: Carrier
- 8.: Arm
- 9.: Panel
- 10.: Adjusting rod
- 11.: Base
- 12.: Rod
- 13.: Rod
- 14.: Strut
- 15.: Fitting piece
- 16.: Fitting piece
- 17.: Bolt connection
- 18.: Ledge
- 19.: Fastening flange
- 20.: Rod, cross runner
- 21.: Support flange
- 22.: Bracket
- 23.: Fastening lip
- 24.: Bearing block

## Claims

1. Carrier device for elements (9) intended for absorbing and/or reflecting and/or focusing solar radiation, such as solar cells, solar collectors, mirrors, lenses and the like, comprising a main frame (1) made up of longitudinal runners (2) extending parallel next to one another and cross runners (3) extending transversely to the longitudinal runners, auxiliary frames (5), which are rotatably attached to the main frame (1), for the elements (9), and also a support construction (11-13) acting on two of the longitudinal runners (2), **characterized in that** universal junction points (4) are provided, to each of which a longitudinal runner (2) and an auxiliary frame (5) are fastened.

2. Device according to Claim 1, wherein a cross runner (3) is fastened to a junction point (4).

3. Device according to Claim 1 or 2, wherein the support construction (11-13) is fastened to a junction point (4).

4. Device according to one of the preceding claims, wherein a strut (14) is fastened to each junction point (4) of parallel longitudinal runners (2), which junction points (4) are displaced with respect to one another in the longitudinal direction of the longitudinal runners (2).

5. Device according to one of the preceding claims, wherein the cross runners (3) comprise hollow rods (20), the ends of which may be formed by fastening lips (23), which ends are each connected to a junction point (4).

6. Device according to one of the preceding claims, wherein the mainframe (1) comprises in each case at least two legs (12, 13) which converge and are supported on one and the same foundation.

7. Device according to Claim 6, wherein the legs (12, 13) each comprise a hollow rod (20), the ends of which may be formed by fastening lips (23).

8. Device according to one of the preceding claims, wherein each junction point (4) is provided with a bracket (22) to which an auxiliary frame (5) is fastened.

9. Device according to one of the preceding claims, wherein the auxiliary frames (5) are rotatable about an axis which is parallel to the cross runners (3).

10. Device according to one of the preceding claims, wherein each junction point (4) comprises two fitting pieces (15, 16), between each of which a longitudinal runner (2) is clamped.

11. Device according to one of the preceding claims, wherein substantially all the connections between a longitudinal runner (2), a cross runner (3) and an auxiliary frame (2) are formed by universal and identical junction points (4).

12. Arrangement for generating energy from solar radiation, comprising a carrier device according to one of the preceding claims with a main frame (1) made up of longitudinal runners (2) extending parallel next to one another, cross runners (3) extending transversely to the longitudinal runners, auxiliary frames (5) which are rotatably attached to the main frame, and also a support construction (11-13) acting on the main frame (1), wherein the auxiliary frames (5) are provided with elements (9) intended for absorbing or reflecting solar radiation, such as solar cells, solar collectors, mirrors and the like.

13. Universal junction point (4) for a device according to one of Claims 1-12 for a device according to Claim 10, comprising two fitting pieces (15, 16).

14. Universal junction point according to Claim 13, wherein the fitting pieces (15, 16) each have a bearing surface intended to rest against a surface of a longitudinal runner (2), and one of the fitting pieces (15, 16) comprises a bracket (22) provided with a bearing block (24).

15. Universal junction point according to Claim 14, wherein the fitting pieces comprise at least one fastening flange (19) and/or a support flange (21).
